# EUROPÄISCHE PATENTANMELDUNG

(11) **EP 3 859 918 A1**
(43) Veröffentlichungstag der Anmeldung: **04.08.2021**
(21) Anmeldenummer: 21154108.1
(22) Anmeldetag: 28.01.2021
(51) Int. Cl.: H02G 3/04, H02G 3/06

(54) **INSTALLATIONSVORRICHTUNG**

(30) Priorität: 28.01.2020 DE 102020101966
(71) Anmelder: Kaiser GmbH & Co. KG, 58579 Schalksmühle (DE)
(72) Erfinder: RITTER, Mathias, 58553 Halver (DE)
(74) Vertreter: Rentsch Partner AG

(57) **Zusammenfassung**

Die Erfindung betrifft eine Installationsvorrichtung (1) für die Befestigung mindestens eines Elektroinstallationsrohres an einer Schalung eines zu giessenden Wandsegmentes, insbesondere aus Beton, umfassend mindestens eine Einführeinheit (2). Die mindestens eine Einführeinheit umfasst weiter einem Sockel (3) zur Auflage der Installationsvorrichtung (1) an der Schalung und ein rückseitig von dem Sockel (3) angeordneter, sich in eine axiale Richtung erstreckender röhrenförmiger Aufnahmestutzen (4). In dem Aufnahmestutzen ist eine Durchführöffnung (5) angeordnet, welche sich von einer vorderseitigen ersten Mündung (6) angeordnet im Sockel (3) zu einer rückseitigen zweiten Mündung (7) des röhrenförmigen Aufnahmestutzens (4) erstreckt. An der Installationsvorrichtung (1) ist seitlich mindestens ein Wirkverbindungsmittel (8) zum Wirkverbinden einer weiteren Installationsvorrichtung (1) angeordnet.

## Beschreibung

Die vorliegende Erfindung betrifft eine Installationsvorrichtung für die Befestigung mindestens eines Elektroinstallationsrohres an einer Schalung eines zu giessenden Wandsegmentes.

Aus dem Stand der Technik sind Installationsvorrichtungen für die Befestigung mindestens eines Elektroinstallationsrohres an einer Schalung eines zu giessenden Wandsegmentes bekannt. Diese Installationsvorrichtungen sind insbesondere an den Übergängen zwischen einzelnen Betonwandsegmenten, wie z.B. zwischen einer Wand und einem Boden oder Decke, bekannt. Die Installationsvorrichtungen werden vor dem Giessen des Wandsegmentes an der Schalung und/oder Armierung des zu giessenden Wandsegmentes befestigt und dienen zu einem späteren Zeitpunkt als Anschluss an einer entsprechenden Installationsvorrichtung, angeordnet an einem weiteren Wandsegment.

Ein Beispiel einer solchen Installationsvorrichtung ist gezeigt in der DE202011001382U1, veröffentlicht am 21.04.2011 in Namen derselben Anmelderin. Diese offenbart einen Rohrkrümmer zum Einstecken oder Durchstecken von Leerrohren und/oder von Installationsleitungen. Zur Befestigung des Rohrkrümmers sind an dessen Mantelfläche zwei Stützen angebracht. Diese Installationsvorrichtung kann mittels der Stützen zwischen den Schalungen des Betonsegmentes eingeklemmt werden.

Ein weiteres Beispiel einer bekannten Installationsvorrichtung ist die CH659740A, veröffentlicht am 13.02.1987 in Namen der Agro Ag. Diese offenbart eine Befestigungsplatte, an welcher durch die Platte hindurch ein offenes Ende eines Rohrstücks fixiert ist. Die Befestigungsplatte ist mit beidseitig überstehenden Augen versehen, welche zum Befestigen der Vorrichtung auf der Schalung mittels Nägeln dienen.

Eine Aufgabe der Erfindung besteht darin eine Installationsvorrichtung bereitzustellen, welche eine platzsparende und einfache Montage ermöglicht.

Eine Installationsvorrichtung gemäss der Erfindung dient zur Befestigung mindestens eines Elektroinstallationsrohres an einer Schalung eines zu giessenden Wandsegmentes aus Beton. Die erfindungsgemässe Installationsvorrichtung umfasst mindestens eine Einführeinheit zur Befestigung eines Endes eines Elektroinstallationsrohres. Die mindestens eine Einführeinheit umfasst jeweils einen Sockel zur Auflage der Installationsvorrichtung an der Schalung. Rückseitig von dem Sockel steht ein röhrenförmiger Aufnahmestutzen ab. Der Aufnahmestutzen kann zur Anbindung des Elektroinstallationsrohres oder eines Rohradapters, wie später beschrieben, dienen. Eine Durchführöffnung zum Durchführen von Leitungen o. ä. erstreckt sich durch die mindestens eine Einführeinheit. Mit Vorteil erstreckt sich die Durchführöffnung in die axiale Richtung (senkrecht zu einer Auflagefläche des Sockels, welche zur Auflage des Sockels an der Schalung dient). Diese verläuft von einer vorderseitigen ersten Mündung, welche im montierten Zustand der Installationsvorrichtung in Richtung der Schalung zeigt, zu einer rückseitigen zweiten Mündung. Die Durchführöffnung verläuft durch den Sockel und wird im Aufnahmestutzen von einer röhrenförmigen Seitenwand des Aufnahmestutzens umgeben. Die rückseitige zweite Mündung wird von einem Ende der Seitenwand des Aufnahmestutzens gebildet. Ebenfalls denkbar ist jedoch, dass der Aufnahmestutzen schräg oder gekrümmt von dem Sockel absteht.

Seitlich an der Installationsvorrichtung können Wirkverbindungsmittel zum Wirkverbinden mindestens einer weiteren Installationsvorrichtung angeordnet sein. Mit Vorteil sind die Wirkverbindungsmittel derart angeordnet und ausgestaltet, dass die Installationsvorrichtung matrizenartig mit mindestens einer weiteren Installationsvorrichtung wirkverbunden werden kann. Hierzu können die Wirkverbindungsmittel entlang einer Kontur der Auflagefläche des Sockels angeordnet sein. Die matrizenartige Wirkverbindung erlaubt eine besonders enge und einfach auszurichtende Anordnung eines Rasters von mehreren Installationsvorrichtungen an einer Stelle eines Betonwandsegmentes. Mit Vorteil ist hierfür der Sockel der mindestens einen Einführeinheit in die axiale Richtung im Wesentlichen rechteckig, insbesondere quadratisch, ausgestaltet. Im Fall, dass mehrere Einführeinheiten vorhanden sind, können die (in die axiale Richtung) im Wesentlichen rechteckigen, insbesondere quadratischen, Einführeinheiten eine wiederum rechteckige Installationsvorrichtung bilden. Auf diese Weise kann die Installationsvorrichtung über vier Anschlussseiten senkrecht zur axialen Richtung mit mindestens einer weiteren Installationsvorrichtung verbindbar sein. Insbesondere kann die Installationsvorrichtung gleichzeitig über alle vier Anschlussseiten mit weiteren Installationsvorrichtungen wirkverbindbar sein. Die Wirkverbindungmittel sind hierbei mit Vorteil im Bereich von den vier Anschlussseiten der Installationsvorrichtung angeordnet. Eine Anschlussseite kann sich je nach Ausgestaltung über mehrere Einführeinheiten, insbesondere über zwei Einführeinheiten, erstrecken. Die Anbindung von mehreren Installationsvorrichtungen aneinander erlaubt eine kompakte Bauweise und ermöglicht u.a. eine Montage nahe an einer Kante des Betonwandsegmentes.

Mit Vorteil erstrecken sich die Wirkverbindungsmittel in die axiale Richtung zumindest bereichsweise entlang des Aufnahmestutzens und/oder des Sockels. Eine in die axiale Richtung längere Ausgestaltung des Wirkverbindungsmittels verbessert die Stabilität zweier verbundener Installationsvorrichtungen und somit dessen Ausrichtung an der Schalung. Beispielsweise können die Wirkverbindungsmittel über Stege mit dem Aufnahmestutzen verbunden sein. Mit Vorteil erstrecken sich die Stege von dem Sockel in die axiale Richtung und/oder erstrecken sich radial von einer Aussenseite des Aufnahmestutzens. Mit Vorzug sind die Wirkverbindungsmittel derart ausgestaltet, dass die mehreren Installationsvorrichtungen, wie oben beschrieben, matrizenartig aneinander befestigbar sind. Die Installationsvorrichtung kann beispielhafterweise an mindestens einer ersten Anschlussseite ein erstes Wirkverbindungsmittel und an einer dieser gegenüberliegenden zweiten Anschlussseite ein zweites Wirkverbindungsmittel aufweisen. Das eine erste Wirkverbindungsmittel ist hierbei mit Vorteil zu dem zweiten Wirkverbindungsmittel komplementär ausgestaltet, d.h. das erste Wirkverbindungsmittel kann mit einem (weiteren) zweiten Wirkverbindungsmittel wirkverbunden werden (und vice versa).

Dies ermöglicht eine Anreihung von im Wesentlichen baugleichen Installationsvorrichtungen. Die Wirkverbindungsmittel können eine Schienenführung (z.B. eine Feder-Nut-Verbindung, eine Schwalbenschwanzführung oder ähnliches) und/oder Rastmittel umfassen. Im Fall einer Feder-Nut-Verbindung kann das erste Wirkverbindungsmittel als eine Führungsnut und das zweite Wirkverbindungsmittel als eine in dieser geführten Feder ausgeführt sein.

Für eine leichte Ausrichtung der Installationsvorrichtung an der Wand kann die Installationsvorrichtung Ausrichtmittel umfassen. Mit Vorteil sind pro Installationsvorrichtung mindestens vier Ausrichtmittel vorhanden, welche die Ausrichtung vereinfachen. Mit Vorteil sind die Ausrichtmittel bezüglich einer Mittelachse der mindestens einen Durchführöffnung im Bereich der ersten Mündung um je 90° (grad) zueinander versetzt angeordnet. Die Ausrichtmittel können eine optische Markierung und/oder eine Kerbe o.ä. sein. Mit Vorteil sind die Ausrichtmittel an den Wirkverbindungsmitteln, z.B. in der Nut oder auf der Feder, angeordnet.

Je nach Ausführung kann die Installationsvorrichtung einen Deckel umfassen, welcher die erste Mündung der mindestens einen Einführeinheit verschliessen kann. Mit Vorteil ist der Deckel an dem Sockel angeformt. Ebenfalls denkbar kann der Deckel über ein Scharnier an dem Sockel angebracht sein. Das Scharnier und der Deckel können ebenfalls auch gemeinsam angeformt sein. Der Deckel kann auf die erste Mündung aufpressbar ausgestaltet sein. Vorteilhafterweise sind das Scharnier und der Deckel im montierten Zustand des Deckels innerhalb einer Kontur des mindestens einen Sockels angeordnet. Hierzu kann der Sockel auf der Auflagefläche eine Aussparung aufweisen, welche von der ersten Mündung zum Scharnier verläuft. In diese Aussparung kann im montierten Zustand des Deckels auf der ersten Mündung ein zwischen dem Scharnier und dem Deckel angeordnetes Verbindungsstück aufgenommen werden. Das Verbindungsstück verbindet den Deckel mit dem Scharnier und kann beispielsweise die Form eines flachen Bandes aufweisen. Mit Vorteil liegt das Verbindungsstück im montierten Zustand vollständig in der Ausnehmung und verschliesst diese. (D.h. das Verbindungsstück reicht im montierten Zustand in die axiale Richtung bis an die Auflagefläche des Sockels heran.) Auf diese Weise wird beim Giessen des Wandsegmentes aus Beton ein Fliessen von Beton auf die Auflagefläche erschwert. Das Scharnier kann zwischen der ersten Anschlussseite und einer zu dieser benachbarten dritten Anschlussseite der Installationsvorrichtung angeordnet sein. (Die dritte Anschlussseite liegt zwischen den sich gegenüberliegenden ersten und zweiten Anschlussseite). Wie oben beschrieben, ist die Installationsvorrichtung mit Vorzug matrizenartig über eine ihrer jeweiligen vier Anschlussseiten mit mindestens einer weiteren Installationsvorrichtung wirkverbindbar. Damit der Deckel eine solche Wirkverbindung nicht behindert, kann dieser (im nicht montierten, geöffneten Zustand) aus der axialen Richtung betrachtet diagonal von der mindestens einen Einführeinheit abstehen, sodass der Deckel, respektive das Scharnier, zwischen der ersten Anschlussseite und der dritten Anschlussseite angeordnet ist. Mit Vorteil ist der Deckel in dem geöffneten Zustand derart angeordnet, dass dieser ausserhalb eines Wirkverbindungsraums liegt. Der Wirkverbindungsraum ist hierbei derjenige Raum neben der Installationsvorrichtung, den eine über die erste und/oder die dritte Anschlussseite wirkverbundene Installationsvorrichtung einnehmen würde.

Alternativ kann die erste Mündung in einem initialen Zustand (vor der Montage) durch einen heraustrennbaren Wandbereich verschlossen sein. Der heraustrennbare Wandbereich kann über eine mindestens eine Dünnstelle an dem Sockel angeformt und entlang dieser heraustrennbar sein.

In einer Ausführung der Erfindung umfasst die Installationsvorrichtung mindestens zwei Einführeinheiten. Bei mehreren Einführeinheiten kann sich eine Anschlussseite über die mehreren Einführeinheiten entlang der Installationsvorrichtung erstrecken. Diese einzelnen Einführeinheiten können in einem initialen Zustand je über eine Trennstelle miteinander verbunden sein. Eine Trennstelle kann beispielsweise über eine oder mehrere Sollbruchstellen und/oder Dünnstellen geformt sein, welche zwischen der ersten und der zweiten Einführeinheit angeordnet ist. Entlang der Trennstelle kann eine Einführeinheit von der Installationsvorrichtung abgetrennt werden und separat montiert werden. Bei einer Ausführung mit zwei Einführeinheiten ist es vorteilhaft, wenn die Scharniere der Deckel diagonal gegenüberliegend an der Installationsvorrichtung angeordnet sind. Weiterhin können bei einer Ausgestaltung mit mindestens zwei Einführeinheiten die Wirkverbindungsmittel entlang der Trennstelle(n) weggelassen werden. Für die matrizenartige Wirkverbindung ist es von Vorteil, wenn die beiden Einführeinheiten (insbesondere jedoch zumindest die Wirkverbindungmittel und/oder die Ausgestaltung der Deckel) in Bezug auf einen Symmetriepunkt zueinander punktsymmetrisch ausgestaltet sind. Der Symmetriepunkt liegt mit Vorzug auf der Trennstelle, insbesondere mittig auf der Trennstelle.

Je nach Ausführung kann die Installationsvorrichtung ein an dem Aufnahmestutzen angeordneten Rohradapter umfassen. An einem Ende des Rohradapters kann ein Elektroinstallationsrohr befestigbar sein. Der Rohradapter kann einen Rohrkrümmer umfassen. Für eine gute Stabilität kann der Rohradapter, respektive der Rohrkrümmer, mindestens ein in die axiale Richtung erstreckendes Stützelement zur zusätzlichen Abstützung an der Schalung umfassen. Mit Vorteil ist ein erstes Stützelement, zur Abstützung an der (vorderseitigen) Schalung an welcher die Installationsvorrichtung angebracht ist, vorgesehen. Das erste Stützelement kann das vom Aufnahmestutzen weggewandte Ende des Rohrkrümmers in die axiale Richtung gegen eine vorderseitige Schalung abstützen. Hierbei kann ein distales Ende des ersten Stützelementes, welches im eingebauten Zustand der Installationsvorrichtung an der (vorderseitigen) Schalung anliegt, in axialer Richtung neben dem Stutzen angeordnet sein. Das erste Stützelement kann sich im montierten Zustand daher in die axiale Richtung auf die gleiche axiale Position wie die Auflagefläche des Stutzens erstrecken. Alternativ oder ergänzend kann ein zweites Stützelement, zur Abstützung an einer der vorderseitigen Schalung gegenüberliegenden (rückseitigen) Schalung vorgesehen sein. Das zweite Stützelement erstreckt sich vorteilhafterweise ebenfalls in die axiale Richtung (entgegengesetzt dem ersten Stützelement). Das zweite Stützelement kann an seinem distalen Ende als Sacklochhülse ausgebildet sein, in die eine Stützstange einsetzbar ist, die sich an der gegenüberliegenden Schalung des Wandsegmentes abstützen kann. Je nach Ausgestaltung kann der Rohradapter mit dem Aufnahmestutzen, insbesondere über ein erstes Ende des Rohradapters, wirkverbindbar sein. Weiterhin kann dieser über ein dem ersten Ende gegenüberliegenden zweiten Ende an dem Elektroinstallationsrohr befestigbar sein. Alternativ kann der Rohradapter jedoch ebenfalls an dem Aufnahmestutzen angeformt sein.

Je nach Ausführungsform, kann der Aufnahmestutzen eine Dichtung zum Abdichten des eingeführten Elektroinstallationsrohres oder des (wirkverbundenen) Rohradapters gegen den Aufnahmestutzen aufweisen. Der Aufnahmestutzen kann an seiner Innenseite mindestens ein Rastelement zum Einrasten eines wirkverbundenen Rohradapters und/oder eines Elektroinstallationsrohres aufweisen. Mit Vorteil sind jedoch mehrere Rastelemente vorhanden, welche jeweils derart ausgestaltet sind, dass Elektroinstallationsrohre oder Rohradapter unterschiedlicher Durchmesser in dem Aufnahmestutzen verrastet werden können. Die mehreren Rastelemente können in axialer Richtung hintereinander angeordnet sein. Die Rastelemente können als Vorsprünge, angeordnet auf der Innenseite des Aufnahmestutzens, ausgestaltet sein. Die Vorsprünge können zumindest bereichsweise um die Durchführöffnung herum angeordnet sein.

Je nach Anwendung kann die Installationsvorrichtung mindestens ein Befestigungsmittel zur Befestigung des Sockels an einer Schalung umfassen. Mit Vorteil sind die Befestigungsmittel in die axiale Richtung innerhalb einer Kontur der Auflagefläche angeordnet. Auf diese Weise lassen sich mehrere Installationsvorrichtungen in einem besonders engen Raster miteinander wirkverbinden. Weiterhin kann eine Installationsvorrichtung so auch bei eng gesetzten Armierungen des Betonsegmentes benutzt werden, da diese platzsparend eingebaut und befestigt werden kann. Das mindestens eine Befestigungsmittel kann mindestens einen rückseitig von dem Sockel abstehenden Dom umfassen, mit einer in diesem angeordneten sich in die axiale Richtung erstreckenden zweiten Durchgangsöffnung zur Aufnahme von Befestigungselementen, wie Nägel oder Schrauben o.ä.. Die Durchgangsöffnung kann im Querschnitt rund oder eckig, z.B. dreieckig ausgestaltet sein. Eine dreieckige Gestaltung hat den Vorteil, dass die Befestigungselemente vor der Montage klemmend an der Installationsvorrichtung vorpositioniert werden können. Weiterhin kann das Befestigungsmittel um die Durchgangsöffnung herum einen heraustrennbaren Bereich aufweisen, welcher nach der Montage und nach dem Giessen von Beton bei der Entfernung der Schalung bewirkt, dass die Befestigungselemente gemeinsam mit der Schalung in einem Schritt entfernt werden können. Der heraustrennbare Bereich kann hierzu von einer Sollbruchstelle umgeben sein. Alternativ oder ergänzend kann das Befestigungsmittel jedoch ebenfalls eine Ausnehmung und/oder Oberflächensegment auf dem Sockel sein, welches zur Befestigung an der Schalung mittels Klebemitteln (z.B. Heisskleber oder Klebeband) dient. Das Oberflächensegment kann hierzu eine profilierte Oberfläche aufweisen, welche das Haften des Klebemittels an der Installationsvorrichtung unterstützt. Ergänzend kann die Installationsvorrichtung weitere (zweite) Befestigungsmittel zur Befestigung an der Armierung des zu giessenden Wandsegmentes aufweisen. Diese zweiten Befestigungselemente können beispielsweise seitlich von der Installationsvorrichtung abstehende Befestigungsflügel zur Auflage an der Armierung sein.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsvorrichtung gemäss der Erfindung in einer perspektivischen Ansicht von schräg vorne;
- Fig. 2: Die erste Variante der Installationsvorrichtung gemäss Figur 1 in einer Ansicht von vorne;
- Fig. 3: Die erste Variante der Installationsvorrichtung gemäss Figur 1 in einer perspektivischen Ansicht von schräg hinten;
- Fig. 4: Die erste Variante der Installationsvorrichtung gemäss Figur 1 in der Ansicht von hinten;
- Fig. 5: Zwei wirkverbundene Installationsvorrichtungen gemäss der Erfindung.

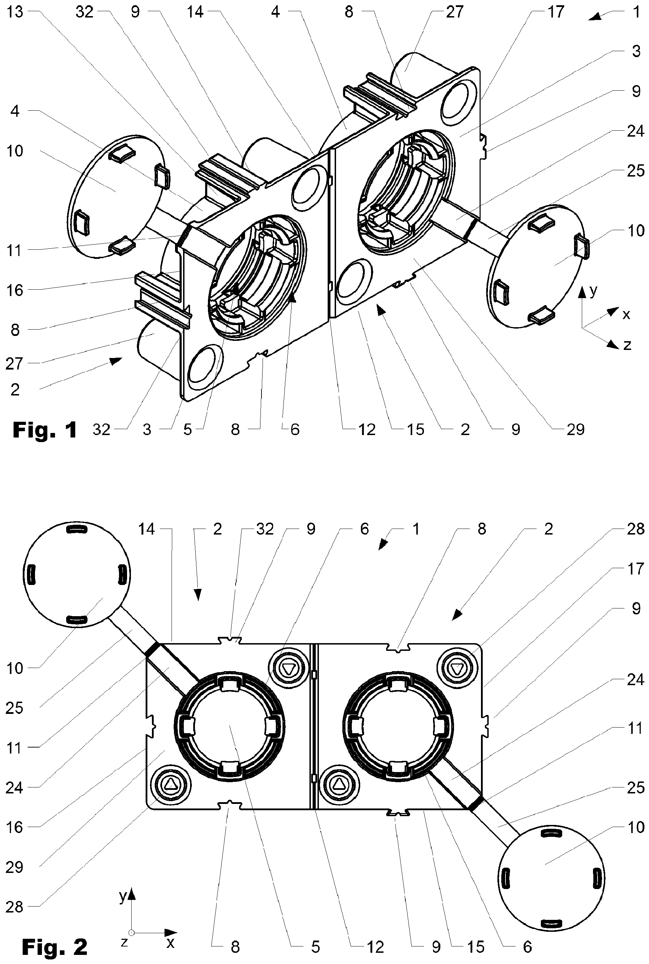

**Figur 1** bis **Figur 4** zeigen eine erste Variante einer erfindungsgemässen Installationsvorrichtung 1. Die gezeigte Installationsvorrichtung 1 umfasst zwei Einführeinheiten 2, welche nebeneinander angeordnet sind und je einen Sockel 3 und einen Aufnahmestutzen 4 umfassen. Der Sockel 3 dient zur vorderseitigen Auflage an einer Schalung des zu giessenden Wandsegmentes aus Beton (nicht gezeigt). Rückseitig ragt ein Aufnahmestutzen 4 zur Aufnahme eines Elektroinstallationsrohres oder eines Rohradapters 18, 19 von dem Sockel 3 ab. Durch den Sockel 3 und den Aufnahmestutzen 4 erstreckt sich je eine Durchführöffnung 5. Die Durchführöffnung 5 erstreckt sich von einer vorderseitigen ersten Mündung 6 angeordnet im Sockel 3 zu einer rückseitigen zweiten Mündung 7, welche von dem Aufnahmestutzen 4 gebildet wird. Die erste Mündung 6 kann durch einen Deckel 10 verschliessbar ausgestaltet sein. Mit Vorteil ist dieser, wie gezeigt, über ein Scharnier 11 an dem Sockel 3 angeformt. Für eine dichtende Anlage an der Schalung ist es von Vorteil, wenn der montierte Deckel 10 in einem montierten Zustand in die axiale Richtung nicht über eine Auflagefläche 29 des Sockels 3 hinausragt. Hierfür kann in dem Sockel 3 eine Ausnehmung 24 für das Scharnier 11 und/oder ein Verbindungstück 25, angeordnet zwischen dem Deckel 10 und dem Scharnier 11, vorgesehen sein. Zum Entfernen des Deckels 10 kann eine im Deckel 10 angeordnete Werkzeugöffnung 30 vorgesehen sein, mittels welcher der Deckel 10 einfacher aus der ersten Mündung 6 gelöst werden kann.

Die Einführeinheiten 2, respektive die Sockel 3, sind in die axiale Richtung im Wesentlichen quadratisch ausgestaltet und formen eine im Wesentlichen rechteckige Installationsvorrichtung 1. Die Installationsvorrichtung 1 ist senkrecht zur axialen Richtung (z- Richtung, Richtung normal zur Auflagefläche 29 des Sockels 3) über vier Anschlussseiten 14, 15, 16, 17 in unterschiedliche Richtungen mit mindestens einer weiteren Installationsvorrichtung 1 verbindbar. Die erste und die zweite Anschlussseite 14, 15 erstrecken sich über beide Einführeinheiten 2. Zur Wirkverbindung sind entlang der Anschlussseiten 14, 15, 16, 17 der Installationsvorrichtung 1 Wirkverbindungsmittel 8, 9 positioniert. Diese werden in der gezeigten Variante von ersten und zweiten Wirkverbindungsmitteln 8, 9 gebildet. Das Scharnier 11 ist zwischen der ersten Anschlussseite 14 und einer zu dieser benachbarten dritten Anschlussseite 16, bzw. der zweiten Anschlussseite 15 und einer zu dieser benachbarten vierten Anschlussseite 17, angeordnet. Das erste Wirkverbindungsmittel 8 ist eine Führungsnut und das zweite Wirkverbindungsmittel 9 ist zu der Nut komplementäre Feder. Für eine leichte Ausrichtung der Installationsvorrichtung 1 an der Wand kann die Installationsvorrichtung 1 Ausrichtmittel 32 in Form einer Kerbe umfassen, welche je an den Wirkverbindungsmitteln 8, 9, angeordnet sind.

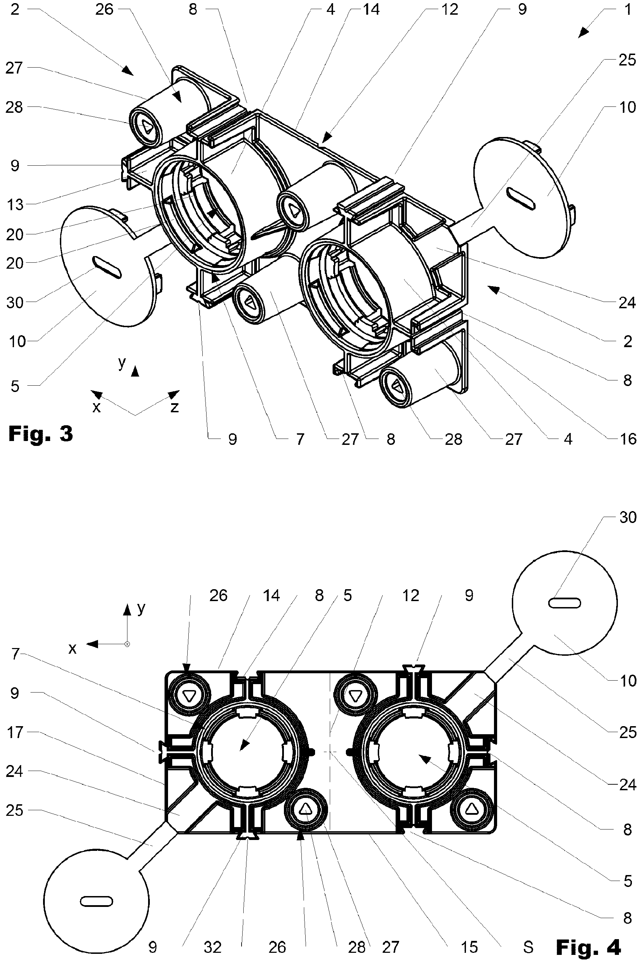

Zur stabilen Wirkverbindung ist es vorteilhaft, wenn die Wirkverbindungsmittel 8, 9 sich in die axiale Richtung zumindest bereichsweise über den Sockel 3 und den Aufnahmestutzen 4 erstrecken. Hierzu können an dem Aufnahmestutzen 4 an einer Aussenseite mehrere radial abstehende Stege 13 vorgesehen sein, an welchen die Wirkverbindungsmittel 8, 9 angebracht sind. In **Figur 2** und **Figur 4** ist zu sehen, dass die beiden Einführeinheiten 2,2 (insbesondere die Wirkverbindungmittel 8, 9 sowie die Anordnung der Deckel 10) in Bezug auf einen Symmetriepunkt S zueinander punktsymmetrisch ausgestaltet sind. Der Symmetriepunkt S liegt auf der Trennstelle 12.

Zur Befestigung an der Schalung sind Befestigungsmittel 26 vorgesehen. In der gezeigten ersten Variante der Installationsvorrichtung 1 umfassen die Befestigungsmittel 26 mindestens einen rückseitig von dem Sockel 3 abstehenden Dom 27 mit einer darin angeordneten Durchgangsöffnung 28 für einen Nagel und/oder einer Schraube. Die Durchgangsöffnung 28 ist im Querschnitt dreieckig ausgestaltet. Jedoch sind auch andere Befestigungsmittel 26, wie zum Beispiel klebende Befestigungsmittel denkbar.

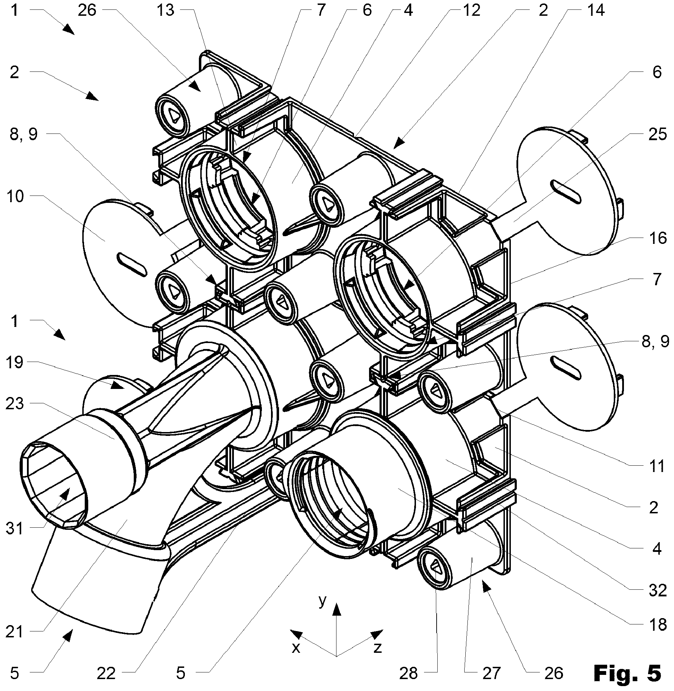

**Figur 5** zeigt eine zweite und eine dritte Variante einer erfindungsgemässen Installationsvorrichtung 1 in einem wirkverbundenen Zustand. Die beiden Installationsvorrichtungen 1 unterscheiden sich voneinander, respektive von der zuvor dargelegten ersten Variante, dadurch, dass die Installationsvorrichtungen 1 jeweils einen (andersartigen) Rohradapter 18, 19 umfassen. Die Rohradapter 18, 19 können über die zweite Mündung 7 mit der Einführeinheit 2 wirkverbunden werden. In der Durchführöffnung 5 der Einführeinheit 2 können hierfür auf einer Innenseite Rastelemente 20 vorgesehen sein. Der erste Rohradapter 18 ist ein sich in die axiale Richtung erstreckender Rohradapter. Dieser kann sich beispielsweise in seinem Durchmesser über die axiale Richtung verändern. Der zweite Rohradapter 19 umfasst einen Rohrkrümmer 21 sowie ein erstes und ein zweites Stützelement 22, 23. Das erste Stützelement 22 und das zweite Stützelement 23 erstrecken sich im montierten Zustand entgegengesetzt in die axiale Richtung. Das erste Stützelement 22 dient hierbei zur Abstützung der Installationsvorrichtung 1 an der Schalung an weleher diese befestigt ist (mittels den Befestigungsmitteln 26). Das zweite Stützelement 23 dient hingegen zur Abstützung an einer dieser gegenüberliegenden (zweiten) Schalung. Das zweite Stützelement 23 weist an seinem distalen Ende eine Sacklochhülse 31 aus, in welche eine Stützstange (nicht gezeigt) einsetzbar ist, die sich an der gegenüberliegenden Schalung des Wandsegmentes abstützen kann.

**LISTE DER BEZUGSZEICHEN**

| | | | |
|---|---|---|---|
| 1 | Installationsvorrichtung | 18 | Erster Rohradapter |
| 2 | Einführeinheit | 19 | Zweiter Rohradapter |
| 3 | Sockel | 20 | Rastelement |
| 4 | Aufnahmestutzen | 21 | Rohrkrümmer |
| 5 | Durchführöffnung | 22 | Erstes Stützelement |
| 6 | Erste Mündung | 23 | Zweites Stützelement |
| 7 | Zweite Mündung | 24 | Ausnehmung |
| 8 | Erstes Wirkverbindungsmittel | 25 | Verbindungsstück |
| | | 26 | Befestigungsmittel |
| 9 | Zweites Wirkverbindungsmittel | 27 | Dom |
| | | 28 | Durchgangsöffnung |
| 10 | Deckel | 29 | Auflagefläche |
| 11 | Scharnier | 30 | Werkzeugöffnung |
| 12 | Trennstelle | 31 | Sacklochhülse |
| 13 | Stege | 32 | Ausrichtmittel |
| 14 | Erste Anschlussseite | S | Symmetriepunkt |
| 15 | Zweite Anschlussseite | | |
| 16 | Dritte Anschlussseite | | |
| 17 | Vierte Anschlussseite | | |

## Patentansprüche

1. Installationsvorrichtung (1) für die Befestigung mindestens eines Elektroinstallationsrohres an einer Schalung eines zu giessenden Wandsegmentes, insbesondere aus Beton, umfassend mindestens eine Einführeinheit (2) mit
a. einem Sockel (3) zur Auflage der Installationsvorrichtung (1) an der Schalung und einem rückseitig an dem Sockel (3) angeordneten röhrenförmigen Aufnahmestutzen (4);
b. einer bereichsweise in dem Aufnahmestutzen (4) angeordneten Durchführöffnung (5), welche sich von einer vorderseitigen ersten Mündung (6) angeordnet im Sockel (3) zu einer rückseitigen zweiten Mündung (7) des röhrenförmigen Aufnahmestutzens (4) erstreckt;
c. mindestens einem seitlich an der Installationsvorrichtung (1) angeordneten Wirkverbindungsmittel (8, 9) zum Wirkverbinden einer weiteren Installationsvorrichtung (1).

2. Installationsvorrichtung (1) gemäss einem der vorangehenden Patentansprüche, **dadurch gekennzeichnet, dass** die erste Mündung (6) durch einen Deckel (10) verschliessbar ist.

3. Installationsvorrichtung (1) gemäss Patentanspruch 2, **dadurch gekennzeichnet, dass** der Deckel (10) an dem mindestens einen Sockel (3) angeformt ist.

4. Installationsvorrichtung (1) gemäss einem der Patentansprüche 2 oder 3 **dadurch gekennzeichnet, dass** der Deckel (10) über ein Scharnier (11) an dem mindestens einen Sockel (3) angebracht ist.

5. Installationsvorrichtung (1) gemäss Patentanspruch 4, **dadurch gekennzeichnet, dass** das Scharnier (11) und der Deckel (10) im montierten Zustand des Deckels (10) an der ersten Mündung (6) innerhalb einer Kontur des mindestens einen Sockels (3) angeordnet ist.

6. Installationsvorrichtung (1) gemäss Patentanspruch 1, **dadurch gekennzeichnet, dass** die erste Mündung (6) in einem initialen Zustand durch einen heraustrennbaren Wandbereich verschlossen ist.

7. Installationsvorrichtung (1) gemäss einem der vorangehenden Patentansprüche, **dadurch gekennzeichnet, dass** die Installationsvorrichtung (1) matrizenartig entlang mindestens vier Anschlussseiten (14, 15, 16, 17) mit weiteren Installationsvorrichtungen (1) wirkverbindbar ist.

8. Installationsvorrichtung (1) gemäss einem der vorangehenden Patentansprüche, **dadurch gekennzeichnet, dass** die Installationsvorrichtung (1) eine erste und mindestens eine zweite Einführeinheit (2) umfasst, welche über eine Trennstelle (12) miteinander verbunden sind.

9. Installationsvorrichtung (1) gemäss Patentanspruch 8, **dadurch gekennzeichnet, dass** die erste und die zweite Einführeinheit (2) in Bezug auf einen Symmetriepunkt (S), angeordnet entlang der Trennstelle (12), zueinander punktsymmetrisch ausgestaltet sind.

10. Installationsvorrichtung (1) gemäss einem der vorangehenden Patentansprüche, **dadurch gekennzeichnet, dass** die Wirkverbindungsmittel (8) über sich in die axiale Richtung erstreckende Stege (13) mit dem Aufnahmestutzen (4) verbunden sind.

11. Installationsvorrichtung (1)gemäss einem der vorangehenden Patentansprüche, **dadurch gekennzeichnet, dass** die Wirkverbindungsmittel (8) eine Schwalbenschwanzführung umfassen.

12. Installationsvorrichtung (1) gemäss einem der vorangehenden Patentansprüche, **dadurch gekennzeichnet, dass** in der Durchführöffnung (5) mindestens ein Rastelement (20) zum Einrasten eines Rohradapters (18, 19) und/oder eines Elektroinstallationsrohres angeordnet ist.

13. Installationsvorrichtung (1) gemäss einem der vorangehenden Patentansprüche, **dadurch gekennzeichnet, dass** die Installationsvorrichtung (1) mindestens ein an dem Aufnahmestutzen (4) angeordneten Rohradapter (18, 19) umfasst.

14. Installationsvorrichtung (1) gemäss Patentanspruch 13, **dadurch gekennzeichnet, dass** der Rohradapter (19) einen Rohrkrümmer (21) umfasst.

15. Installationsvorrichtung (1) gemäss Patentanspruch 14, **dadurch gekennzeichnet, dass** der Rohradapter (19) mindestens ein sich in die axiale Richtung erstreckendes Stützelement (22, 23) umfasst.

16. Installationsvorrichtung (1) gemäss einem der vorangehenden Patentansprüche, **dadurch gekennzeichnet, dass** die Installationsvorrichtung (1) mindestens ein Befestigungsmittel (26) zur Befestigung des Sockels (3) an einer Schalung umfasst.

17. Installationsvorrichtung (1) gemäss Patentanspruch 16, **dadurch gekennzeichnet, dass** das mindestens eine Befestigungsmittel (26) innerhalb einer Kontur einer Auflagefläche (29) des Sockels (3) zur Auflage an der Schalung angeordnet ist.
